# EUROPÄISCHE PATENTSCHRIFT

(11) **EP 1 517 098 B1**
(45) Veröffentlichungstag und Bekanntmachung des Hinweises auf die Patenterteilung: **15.10.2014**
(21) Anmeldenummer: 04090332.0
(22) Anmeldetag: 27.08.2004
(51) Int. Cl.: F24D 19/00, F16K 27/12, F24D 19/10

(54) **Heizkörperventil**
radiator valve
soupape de radiateur

(30) Priorität: 17.09.2003 DE 10343269
(43) Veröffentlichungstag der Anmeldung: 23.03.2005
(73) Patentinhaber: KERMI GmbH, 94447 Plattling (DE)
(72) Erfinder: Stangl, Markus, 94447 Platting (DE); Loibl, Werner, 94447 Platting (DE)
(74) Vertreter: Köckeritz, Günter

(56) Entgegenhaltungen:
- EP-A- 0 900 989
- DE-A- 10 127 855
- DE-A- 19 830 307

## Beschreibung

Die Erfindung betrifft ein Heizkörperventil nach dem Oberbegriff des Anspruchs 1, mit einem Ventilgehäuse, welches am Umfang mit einem Einschraubgewinde, einer Drehmomentenangriffsfläche und einer Befestigungsgeometrie für eine Schutzkappe versehen ist, wobei die Schutzkappe einen aus einer Stirnseite des Ventilgehäuses herausragenden, für die Ventilregulierung durch einen Thermostatkopf vorgesehenen, Ventilstift abdeckt.

Das Heizkörperventil wird mit dem Einschraubgewinde in einen Heizkörper eingeschraubt. Der Heizkörper wird dann mit eingeschraubtem Ventil zur Baustelle transportiert und dort montiert. Die Ventileinsätze werden mit einer Schutzkappe versehen, um den aus dem Ventilgehäuse herausragenden hubstangenartigen Ventilstift vor Beschädigungen zu schützen. Weiter werden die in einen Ventilkörper eingeschraubten Ventileinsätze bis zu deren Ausstattung mit einem Thermostatkopf mit einer Schutzkappe versehen, damit im rauen Baubetrieb Beschädigungen des Ventilstiftes vermieden werden. Derartige Schutzkappen sind unentbehrlich, sie erhöhen aber oft den Montageaufwand, weil nach dem Montieren des Heizkörperventils die Montage der Schutzkappe erforderlich ist.
Zur Gewährleistung eines einheitlichen Massenstromes ist es weiter notwendig die Ventileinsätze voreinzustellen. Eine derartige Voreinstellung bewirkt eine Begrenzung der maximalen Öffnungsweite des Ventileinsatzes. Zum Einstellen einer solchen Voreinstellung ist koaxial zum Ventilstift ein um die Achse des Ventilstifts drehbares Einstellelement vorgesehen. Durch Drehen dieses Einstellelementes erfolgt dann eine Begrenzung des Durchflusses. Zum Betätigen des Einstellelementes ist bekannt, dieses mit einer Aufnahme zum Einsatz eines Werkzeuges auszustatten. Aus dem Stand der Technik sind dazu eine Vielzahl von Lösungen bekannt.
In der DE 197 39 109 C2 wird ein Heizkörperventil der eingangs genannten Art beschrieben. Dieses ist dadurch gekennzeichnet, dass die Drehmomentenangriffsfläche bezogen auf die Einschraubrichtung radial über die Schutzkappe vorsteht. Mit dieser Ausbildung wird es zwar möglich, dass man ein Heizkörperventil mit vormontierter Schutzkappe am Heizkörper montieren kann, die Drehmomentenangriffsfläche wird jedoch nicht von der Schutzkappe abgedeckt und ist somit vor Beschädigungen nicht geschützt.

Ein weiteres Heizkörperventil ist aus der DE 101 27 855 A1 bekannt, die den Oberbegriff von Anspruch 1 zeigt. Hier wird bei einer axialen Krafteinleitung die Unterstützungswand verformt, so dass über den Ventilstift die gegebenenfalls das Ventil zerstörende Kraft auf den Ventilsitz wirken kann.

Der Erfindung liegt von daher die Aufgabe zugrunde ein Heizkörperventil vorzuschlagen, welches die aus dem Stand der Technik bekannten Lösungen verbessert, wobei insbesondere die Funktionalität und Schutzwirkung der Schutzkappe erhalten bleiben soll.

Erfindungsgemäß wird diese Aufgabe durch die Merkmale des Anspruchs 1 gelöst. Vorteilhafte Weiterbildungen der Erfindung sind in den zugehörigen Ansprüchen enthalten.

Demnach beinhaltet die Erfindung ein Heizkörperventil der eingangs genannten Art, wobei die Schutzkappe aus einer äußeren Abdeckhülse und einer inneren Kappe besteht, die über Stege miteinander verbunden sind, wobei der Boden der äußeren Abdeckhülse durch die Stege voneinander getrennte Öffnungen aufweist. Die Schutzkappe ist vorzugsweise einstückig ausgebildet ist und weist eine im Wesentlichen zylindrische Außenform auf, wobei der Boden der äußeren Abdeckhülse zweimal aufgebrochen ist. Durch diese beiden Öffnungen kann ein Schraubmittel auf die vorhandene Drehmomentenangriffsfläche des Ventileinsatzes aufgesetzt werden.

Somit kann die Montage von Ventileinsatz und Schutzkappe zeitlich unabhängig von der bzw. vor der Montage in den Heizkörper erfolgen. Vorzugsweise wird die Montage von Ventileinsatz und Schutzkappe zu der vormontierten Einheit bereits beim Herstellen der Ventileinsätze als zusätzlicher, automatisierbarer Fertigungsschritt erfolgen.

Vorteilhaft ist der in Einschraubrichtung liegende Rand der äußeren Abdeckhülse mit einem Innengewinde versehen, welches mit der Befestigungsgeometrie am Ventilgehäuse zusammenwirkt.

Nach einem weiteren Merkmal ist der in Einschraubrichtung liegende Rand der inneren Kappe gegen die Drehmomentenangriffsfläche gerichtet, wobei der Boden der inneren Kappe eine topfförmige Ausbildung für das Zusammenwirken mit dem Ventilstift aufweist. Der Boden der inneren Kappe drückt demnach den Ventilstift bei aufgeschraubter Schutzkappe in den Ventileinsatz. Über ein Auf- bzw. Zudrehen der Schutzkappe kann somit ein Probebetrieb auf der Baustelle erfolgen.

Vorteilhaft sind die äußere Abdeckhülse und die innere Kappe über die Stege derart voneinander beabstandet, dass in dem sich bildenden Spalt ein Schraubmittel an die Drehmomentenangriffsfläche einbringbar ist.

Insbesondere bei Lagerung und Transport bietet die erfindungsgemäße Lösung der Schutzkappe Vorteile, da die Schutzwirkung in radialer Richtung gegen Schmutz oder Krafteinwirkung unverändert hoch bleibt. Die Schutzwirkung in axialer Richtung wird aber wesentlich erhöht und zwar dadurch, dass der Boden der inneren Kappe bezogen zum Rand der Schutzkappe nach innen in Richtung Ventileinsatz versetzt ist, und bei einer entsprechenden axialen Krafteinwirkung zuerst die äußere Hülse der Schutzkappe deformiert und die Stege verformt werden. Die innere Kappe stützt sich aber am Ventilsatz ab und verhindert somit eine Krafteinleitung über den Ventilstift und den Ventilsitz, was zu einer Zerstörung des Ventileinsatzes führen könnte.

Weitere Vorteile der Erfindung ergeben sich aus der nachfolgenden Beschreibung eines Ausführungsbeispieles. In den Zeichnungen zeigen
- Figur 1:: einen schematischen Querschnitt durch ein Heizkörperventil mit aufgesetzter Schutzkappe und Montagewerkzeug,
- Figur 2:: eine perspektivische Darstellung von Schutzkappe und Ventil als eine vormontierte Einheit.

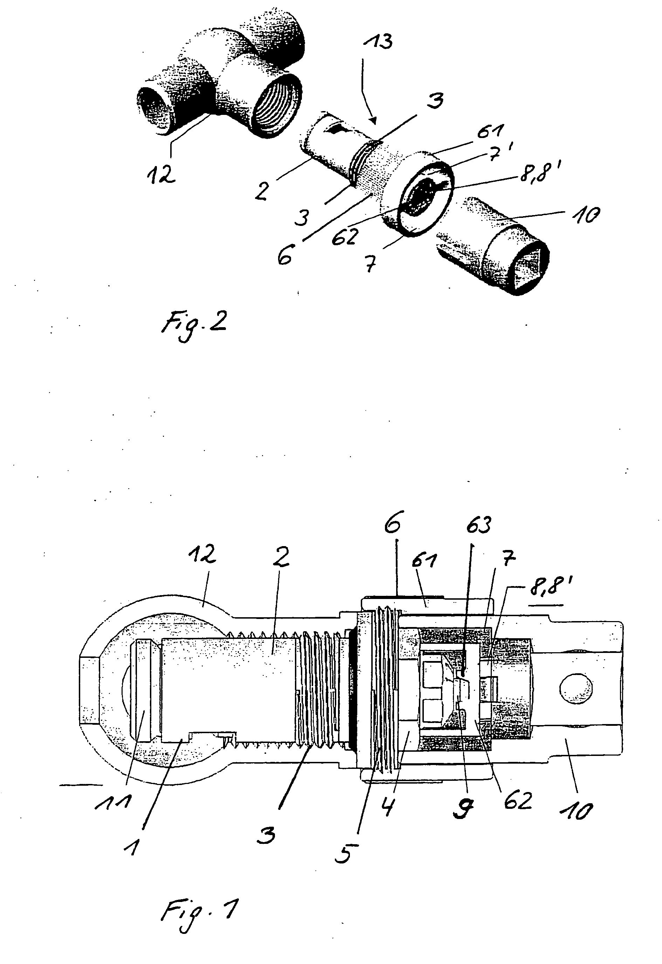

Ein in der Figur 1 im Schnitt dargestelltes Heizkörperventil 1 ist mit einem Außengewinde 3, das sich an seinem Gehäuse 2 befindet in einen Heizkörperfitting 12 eingeschraubt. Zum Einschrauben wird Schraubmittel 10, vorzugsweise ein geschlitzter Steckschlüssel auf das Heizkörperventil 1 aufgesteckt und kommt dabei mit der am Gehäuse 2 ausgebildeten Drehmomentenangriffsfläche 4 in Eingriff. Im Heizkörperventil 1 ist weiter eine Betätigungseinrichtung in Form eines Ventilstiftes 9 vorgesehen, der in an sich bekannter Weise zur Betätigung des Ventils dient. Der Ventilstift 9 ist in Axialrichtung bezogen auf die Einschraubrichtung des Außengewindes 3 verschiebbar und soll vor äußeren mechanischen Einwirkungen und Belastungen von einer Schutzkappe 6 geschützt werden. Die Schutzkappe 6 ist dazu an einer am Ventilgehäuse 2 vorgesehenen Befestigungsgeometrie 5 befestigt und deckt dabei den aus einer Stirnseite des Ventilgehäuses 2 herausragenden Ventilstift 9 ab. Die Schutzkappe 6 ist hier einstückig ausgebildet und weist eine im Wesentlichen zylindrische Außenform auf. Sie besteht aus einer äußeren Abdeckhülse 61 und einer inneren Kappe 62, die über Stege 8, 8'miteinander verbunden sind. Der Boden der äußeren Abdeckhülse 61 weist durch die Stege 8, 8' voneinander getrennte Öffnungen 7, 7'auf. Durch diese beiden Öffnungen 7,7' kann das Schraubmittel 10, vorzugsweise ein geschlitzter Steckschlüssel auf die vorhandene Drehmomentenangriffsfläche 4 des Ventileinsatzes aufgesetzt werden. Der in Einschraubrichtung liegende Rand der inneren Kappe 62 ist gegen die Drehmomentenangriffsfläche 4 gerichtet, wobei der Boden der inneren Kappe 62 eine topfförmige Ausbildung 63 für das Zusammenwirken mit dem Ventilstift 9 aufweist. Der Boden der inneren Kappe 62 drückt demnach den Ventilstift 9 bei aufgeschraubter Schutzkappe 6 in den Ventileinsatz. Über ein Auf- bzw. Zudrehen der Schutzkappe 6 kann somit ein Probebetrieb auf der Baustelle erfolgen.
Vorzugsweise wird die Montage von Ventileinsatz 1 und Schutzkappe 6 zu einer vormontierten Einheit 13 bereits beim Herstellen der Ventileinsätze als zusätzlicher, automatisierbarer Fertigungsschritt vorgenommen.

### Liste der verwendeten Bezugszeichen:

- 1: Heizkörperventil
- 2: Ventilgehäuse
- 3: Außengewinde
- 4: Drehmomentenangriffsfläche
- 5: Befestigungsgeometrie
- 6: Schutzkappe
- 61: äußere Abdeckhülse
- 62: innere Kappe
- 63: topfförmige Ausbildung
- 7,7': Öffnungen
- 8,8': Stege
- 9: Ventilstift
- 10: Schraubmittel
- 11: Ventilsitz
- 12: Heizkörperfitting
- 13: vormontierten Einheit

## Patentansprüche

1. Heizkörperventil mit einem Ventilgehäuse, welches am Umfang mit einem Einschraubgewinde, einer Drehmomentenangriffsfläche und einer Befestigungsgeometrie für eine Schutzkappe versehen ist, wobei die Schutzkappe einen aus einer Stirnseite des Ventilgehäuses herausragenden Ventilstift abdeckt, **dadurch gekennzeichnet, dass** die Schutzkappe (6) aus einer äußeren Abdeckhülse (61) und einer inneren Kappe (62) besteht, die über Stege (8, 8') miteinander verbunden sind, wobei der Boden der äußeren Abdeckhülse (61) durch die Stege (8, 8') voneinander getrennte Öffnungen (7, 7') aufweist.

2. Heizkörperventil nach Anspruch 1, **dadurch gekennzeichnet, dass** der in Einschraubrichtung liegende Rand der äußeren Abdeckhülse (61) mit einem Innengewinde versehen ist, welches mit der Befestigungsgeometrie (5) am Ventilgehäuse (2) zusammenwirkt.

3. Heizkörperventil nach den Ansprüchen 1 und 2, **dadurch gekennzeichnet, dass** der in Einschraubrichtung liegende Rand der inneren Kappe (62) gegen die Drehmomentenangriffsfläche (4) gerichtet ist, und der Boden der inneren Kappe (62) eine topfförmige Ausbildung (63) für das Zusammenwirken mit dem Ventilstift (9) aufweist.

4. Heizkörperventil nach den Ansprüchen 1 bis 3, **dadurch gekennzeichnet, dass** der Boden der inneren Kappe (62) bei aufgeschraubter Schutzkappe (6) den Ventilstift (9) beaufschlagt.

5. Heizkörperventil nach den Ansprüchen 1 bis 4, **dadurch gekennzeichnet, dass** die Schutzkappe einstückig ausgebildet ist und eine im Wesentlichen zylindrische Außenform aufweist.

6. Heizkörperventil nach den Ansprüchen 1 bis 5, **dadurch gekennzeichnet, dass** die Schutzkappe (6) und das Ventil (1) eine vormontierte Einheit (13) bilden.

## Claims

1. Radiator valve with a casing, which is provided at the circumference with a screw thread, a turning surface, and a fastening joint for a guard cap, wherein the guard cap covers a valve pin projecting from a face of the valve casing, **characterized in that** the guard cap (6) consists of an outer sheath (61) and an inner cap (62), which are connected to one another by teeth (8, 8'), wherein the base of the outer sheath (61) possesses openings (7, 7') separated from each other by teeth (8, 8').

2. Radiator valve according to claim 1, **characterized in that** the edge of the casing (61) lying in the direction of the screw is fitted with an inner thread, which has a combined action on the valve casing (2) with the fastening joint (5).

3. Radiator valve according to claims 1 and 2, **characterized in that** the edge of the inner cap (62) lying in the direction of the screw is directed against the turning surface (4), and the base of the inner cap (62) has a pot-shaped projection (63) for interacting with the valve pin (9).

4. Radiator valve according to claims 1 to 3, **characterized in that**, when the guard cap (6) is screwed on, the base of the inner cap (62) comes in contact with the valve pin (9).

5. Radiator valve according to claims 1 to 4, **characterized in that** the guard cap is formed as one piece, and has an essentially cylindrical outer shape.

6. Radiator valve according to claims 1 to 5, **characterized in that** the guard cap (6) and the valve (1) form one preassembled unit (13).

## Revendications

1. Soupape de radiateur avec un boîtier de soupape qui est pourvu sur la périphérie d'un filet de vis, d'une surface d'action de couple et d'une géométrie de fixation pour un couvercle protecteur, le couvercle protecteur recouvrant une tige de soupape dépassant d'un côté frontal du boîtier de soupape, **caractérisée en ce que** le couvercle protecteur (6) se compose d'une douille de recouvrement extérieure (61) et d'un couvercle intérieur (62) qui sont reliés entre eux par des nervures (8, 8'), le fond de la douille de recouvrement extérieure (61) présentant des ouvertures (7, 7') séparées les unes des autres par les nervures (8, 8').

2. Soupape de radiateur selon la revendication 1, **caractérisée en ce que** le bord se trouvant dans le sens de vissage de la douille de recouvrement extérieure (61) est pourvu d'un filet intérieur qui coagit avec la géométrie de fixation (5) sur le boîtier de soupape (2).

3. Soupape de radiateur selon les revendications 1 et 2, **caractérisée en ce que** le bord se trouvant dans le sens de vissage du couvercle intérieur (62) est dirigé contre la surface d'action de couple (4) et le fond du couvercle intérieur (62) présente une réalisation en forme de pot (63) pour coagir avec la tige de soupape (9).

4. Soupape de radiateur selon les revendications 1 à 3, **caractérisée en ce que** le fond du couvercle intérieur (62) sollicite la tige de soupape (9) lorsque le couvercle protecteur (6) est vissé.

5. Soupape de radiateur selon les revendications 1 à 4, **caractérisée en ce que** le couvercle protecteur est réalisé d'un seul tenant et présente une forme extérieure sensiblement cylindrique.

6. Soupape de radiateur selon les revendications 1 à 5, **caractérisée en ce que** le couvercle protecteur (6) et la soupape (1) forment une unité prémontée (13).
